# FASCICULE DE BREVET EUROPEEN

(11) **EP 0 543 692 B1**
(45) Date de publication et mention de la délivrance du brevet: **27.12.1995**
(21) Numéro de dépôt: 92402956.4
(22) Date de dépôt: 30.10.1992
(51) Int. Cl.: A47B 43/00, A47B 57/54, F16B 12/32, G09F 7/18

(54) **Dispositif d'exposition comprenant un montant fixé sur des câbles ou des tiges verticaux**
Schauanordnung mit einem an vertikalen Kabeln oder Stangen befestigten Pfosten
Display device with a mounting connected to vertical cables or rods

(30) Priorité: 08.11.1991 FR 9113843
(43) Date de publication de la demande: 26.05.1993
(73) Titulaire: GROUPE SMS SA, F-78190 Trappes (FR)
(72) Inventeur: Houssin, Bruno, F-75017 Paris (FR)
(74) Mandataire: Plaçais, Jean-Yves

(56) Documents cités:
- EP-A- 0 351 735
- EP-A- 0 375 895
- WO-A-85/02332
- CA-A- 973 840
- DE-A- 2 716 399
- FR-A- 2 538 868

## Description

L'invention concerne un dispositif pour exposer des objets ou des informations.

On connaît de tels dispositifs notamment de FR-A-2 627 241 comprenant des supports pour des objets ou des informations à exposer, par exemple sous forme de tablettes horizontales ou de panneaux verticaux, fixés individuellement sur des éléments allongés sous forme de câbles ou de tiges.

Le but de l'invention est de proposer une nouvelle façon, visuellement attractive, d'associer les supports aux éléments allongés.

L'invention vise un dispositif pour exposer des objets ou des informations, comprenant au moins un montant comportant deux plaques s'étendant chacune sensiblement sur toute sa hauteur et sur toute sa largeur, juxtaposées et écartées l'une de l'autre dans la direction de son épaisseur et reliées entre elles, dans les régions marginales latérales du montant, par des entretoises présentant des évidements qui les traversent en hauteur pour le passage de deux éléments allongés sous forme de câbles tendus ou de tiges rigides s'étendant verticalement, les entretoises présentant des moyens d'accrochage pour la liaison du montant auxdits éléments allongés et les plaques présentant des moyens de réception pour au moins un support d'objets ou d'informations à exposer.

Des caractéristiques optionnelles avantageuses de l'invention sont énoncées ci- après :
- Les évidements sont ouverts vers les bords latéraux du montant sur toute la hauteur des entretoises pour permettre une introduction latérale des éléments allongés.
- Le montant est constitué à partir d'un profilé annulaire définissant deux entretoises s'étendant chacune sur toute sa hauteur, les moyens de réception étant formés par usinage du profilé.
- Le profil des plaques est incurvé vers l'extérieur du montant.
- Le montant est formé à partir de deux pièces profilées identiques constituant chacune une plaque et une portion, adjacente à celle-ci, de chaque entretoise et assemblées entre elles par des surfaces coopérante des portions d'entretoises.
- Les moyens de réception comprennent des fentes horizontales traversantes ménagées dans la région médiane de la largeur des plaques, chaque fente d'une plaque étant disposée dans le même plan horizontal qu'une fente de l'autre plaque de façon à permettre au montant d'être traversé par une tablette support horizontale.
- Les moyens de réception comprennent au moins deux lumières ménagées l'une au-dessus de l'autre à mi-largeur de l'une au moins des plaques pour recevoir des appendices de liaison prévus sur un bord latéral d'un panneau support vertical.
- Le montant est immobilisé sur deux éléments allongés verticaux traversant les évidements des entretoises au moyen de deux pièces d'accrochage fixées sur chaque élément allongé et coopérant avec les moyens d'accrochage de l'entretoise correspondante respectivement aux extrémités supérieure et inférieure du montant.
- Les évidements sont limités par des portions de surfaces cylindriques s'étendant sur plus d'une demi-circonférence et que les pièces d'accrochage présentent une portion cylindrique qui s'ajuste dans l'évidement, raccordée à une portion de plus grand diamètre par un épaulement qui vient en butée sur une face d'extrémité de l'entretoise.
- Les éléments allongés sont des tiges s'élevant à partir d'un pied par lequel le dispositif peut reposer sur le sol.
- Le dispositif comprend au moins une tablette horizontale traversant des fentes de liaison des deux plaques.
- Le dispositif comprend deux ensembles comportant chacun deux éléments allongés et un montant, décalés l'un par rapport à l'autre selon une translation dans la direction de l'épaisseur des montants, et au moins un support d'objets ou d'informations s'étendant d'un montant à l'autre dans cette direction.
- Les supports comprennent au moins un panneau vertical lié par des appendices de ses deux bords latéraux respectivement aux plaques en regard des deux montants.
- Les supports comprennent au moins une tablette horizontale traversant des fentes de liaison des quatre plaques.
- La tablette comporte un ressort allongé dans la direction de l'épaisseur du montant et propre à faire saillie élastiquement vers le bas de façon à s'appliquer contre le bord inférieur des fentes et à appliquer la face supérieure de la tablette contre le bord supérieur des fentes pour l'immobiliser en une position réglable dans ladite direction, et pouvant être rétracté vers le haut pour permettre à la tablette de coulisser librement dans ladite direction.

D'autres caractéristiques et avantages de l'invention apparaîtront à l'examen de la description détaillée ci-après, et des dessins annexés, sur lesquels :
- les figures 1 et 2 sont des vues respectivement de face et de côté d'un dispositif selon l'invention comprenant un montant fixé sur deux câbles et traversé par une série de tablettes horizontales ;
- les figures 3 et 4 sont des vues de dessus de ce dispositif montrant différentes positions des tablettes ;
- la figure 5 est une vue de dessus d'un dispositif comprenant deux montants fixés sur quatre câbles et traversés par des tablettes horizontales ;
- la figure 6 est une vue de dessus d'un montant faisant partie des dispositifs des figures 1 à 5, montrant également un câble et une pièce d'accrochage du montant sur ce câble ;
- la figure 7 est une vue partielle en coupe selon la ligne VII-VII de la figure 6 ;
- la figure 8 est une vue en perspective d'un dispositif selon l'invention comprenant deux montants fixés sur quatre câbles et sur lesquels est monté un panneau vertical ;
- la figure 9 est une vue partielle en perspective montrant les moyens de liaison mutuelle d'un montant et du panneau du dispositif de la figure 8 ; et
- les figures 10 et 11 sont des vues analogues aux figures 1 et 2, dans lesquelles les câbles sont remplacés par des tiges associées à un pied.

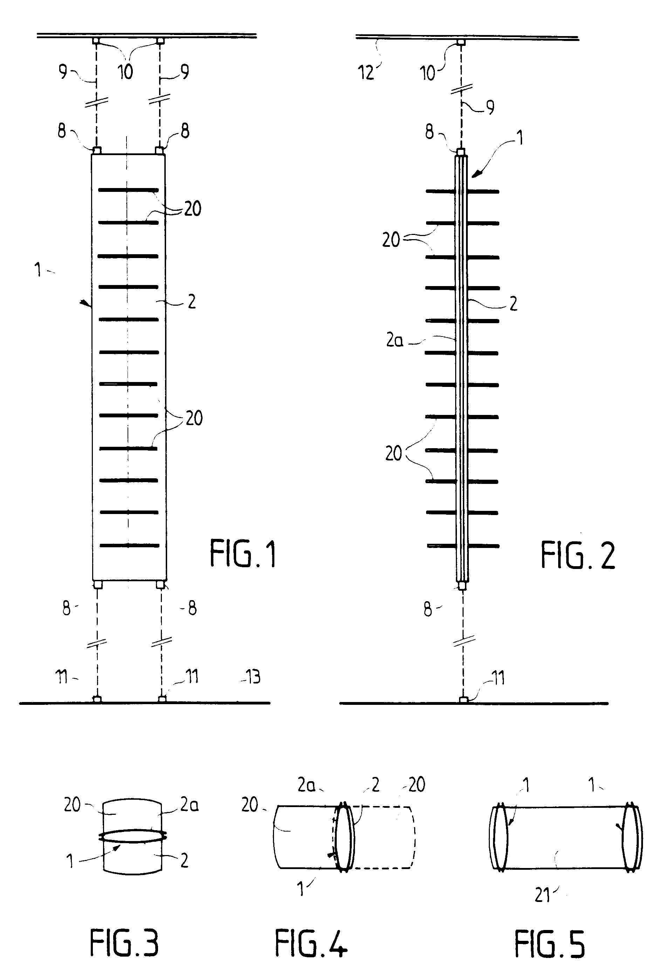

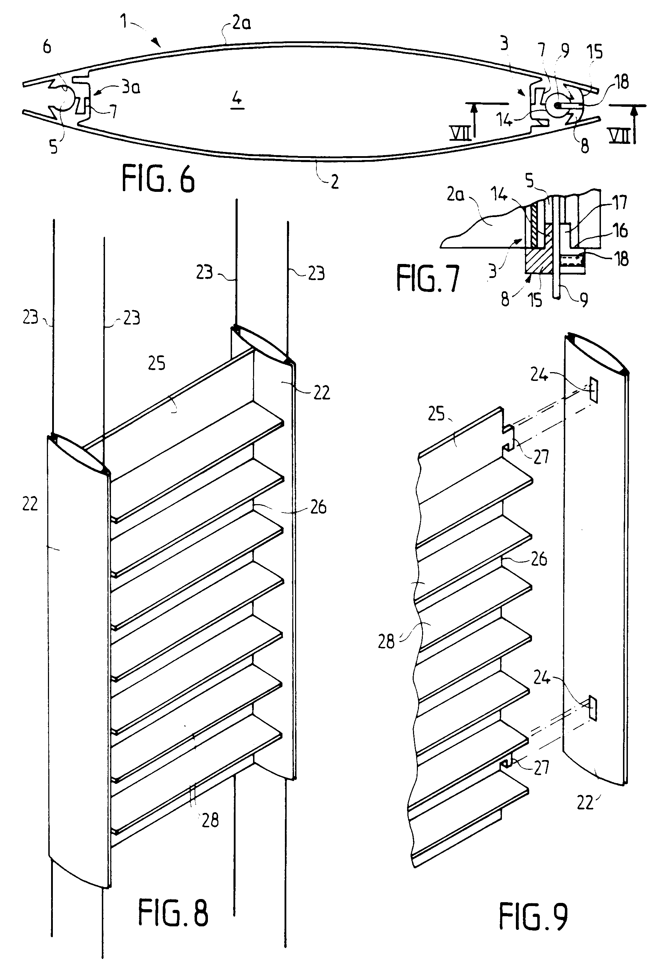

Le dispositif illustré aux figures 1 à 4 comprend un montant vertical 1 comportant deux plaques minces de forme générale rectangulaire 2 et 2a, plus hautes que larges, incurvées dans la direction de leur largeur et dont les faces concaves sont disposées vis-à-vis l'une de l'autre. Ces deux plaques sont reliées entre elles, dans leurs régions marginales latérales, par deux entretoises 3 et 3a (figure 6) qui s'étendent sur toute la hauteur du montant. Celui-ci a la forme générale d'un profilé annulaire dont la cavité centrale 4 s'étend sur la majeure partie de sa largeur. Chaque entretoise 3, 3a est traversée de haut en bas par un évidement 5 qui communique avec l'extérieur en direction du bord latéral vertical du montant, sur toute la hauteur de celui-ci, et qui est limité, en direction des deux plaques et de la cavité 4, par une portion de surface cylindrique de révolution 6 s'étendant sur plus d'une demi-circonférence. Le montant profilé est constitué par l'assemblage de deux pièces profilées identiques formant chacune l'une des plaques 2, 2a et les portions adjacentes à celle-ci des deux entretoises, la surface 6 de chaque évidement 5 appartenant pour partie à chacune de ces pièces. L'assemblage de celles-ci est obtenu au niveau des entretoises par des surfaces coopérantes 7 définissant des liaisons par queues d'arondes.

Le montant 1 est fixé, par l'intermédiaire de pièces d'accrochage 8, sur deux câbles 9 tendus verticalement, de façon connue en soi, chacun entre deux pièces d'ancrage 10 et 11 fixées respectivement au plafond 12 et au sol 13. Les câbles passent dans les évidements 5, où ils peuvent être introduits par les ouvertures latérales de ceux-ci. Deux pièces d'accrochage 8 sont prévues respectivement aux extrémités supérieure et inférieure de chaque entretoise. Elles ont une forme générale de révolution et sont composées de deux portions cylindriques 14 et 15 (figures 6 et 7) raccordées par un épaulement radial 16. Le câble 9 peut être introduit à travers la pièce 8 grâce à une encoche 17 ménagée dans celle-ci selon un plan axial, d'une largeur à peu près égale au diamètre du câble et présentant un fond semi-cylindrique coaxial à la pièce elle-même. Une vis radiale 18 coopérant avec un filetage ménagé dans les parois de l'encoche 17, dans la partie 15 de plus grand diamètre de la pièce 8, serre le câble contre le fond de l'encoche et immobilise la pièce sur celui-ci. La partie 14 de plus petit diamètre s'ajuste dans l'évidement cylindrique 5, et les épaulements 16 des deux pièces 8 viennent en butée respectivement sur les faces supérieure et inférieure horizontales du montant pour immobiliser celui-ci dans la direction verticale.

Des fentes horizontales traversant l'épaisseur des deux plaques 2, 2a en regard de la cavité 4 permettent le passage de tablettes horizontales superposées 20 qui font saillie de part et d'autre de l'épaisseur du montant, et peuvent être déplacées à volonté dans cette direction entre deux positions extrêmes, illustrées respectivement en trait plein et en trait interrompu à la figure 4, dans lesquelles toute la surface utile d'exposition de la tablette se situe respectivement d'un côté et de l'autre du plan général du montant. Les figures 2 et 3 illustrent une position moyenne symétrique par rapport à ce plan.

Le dispositif représenté à la figure 5 comprend deux montants identiques à celui des figures 1 à 4, 6 et 7, fixés de la même façon, chacun sur deux câbles verticaux non représentés par l'intermédiaire de quatre pièces d'accrochage non représentées, de façon à être décalés l'un par rapport à l'autre selon une translation dans la direction de leur épaisseur. Des tablettes horizontales 21 traversent chacune quatre fentes ménagées respectivement dans les quatres plaques appartenant aux deux montants 1, la partie essentielle de leur surface utile d'exposition étant située entre les deux montants.

Le dispositif des figures 8 et 9 comprend deux montants constitués par des profilés identiques à ceux des montants 1 décrits précédemment, fixés sur quatre câbles 23, par l'intermédiaire de pièces d'accrochage non représentées, dans la même disposition relative que les montants de la figure 5. Les fentes horizontales des montants 22 sont remplacées par des lumières 24 ménagées à mi-largeur de la plaque de chaque montant tournée vers l'autre montant. Dans l'exemple illustré, deux lumières de largeur uniforme, allongées dans la direction verticale, sont prévues au voisinage des extrémités supérieure et inférieure de chaque montant. Ces lumières servent à la fixation d'un panneau vertical 25 de forme rectangulaire dont les bords latéraux verticaux 26 coïncident avec les lignes médianes des plaques intérieures des deux montants respectivement. Au-delà de chacun de ces bords 26 font saillie deux appendices 27 en forme de crochets dont l'épaisseur, égale à celle du panneau lui-même, correspond à la largeur des lumières 24. La liaison entre le panneau et les montants s'effectue en insérant les appendices 27 dans les lumières 24 et en abaissant le panneau de façon que les extrémités des crochets 27 passent derrière la plaque, au-dessous des lumières. Des tablettes horizontales 28 servant de supports pour des objets à exposer sont fixées sur une face au moins du panneau 25, par exemple grâce à des perforations prévues à intervalles réguliers dans celui-ci. Une face du panneau 25, ou ses deux faces, les tablettes 28 étant alors supprimées, peuvent servir elles-mêmes de supports pour des objets plats tels que des dessins, des tableaux, des affiches, ou pour des informations ou messages quelconques.

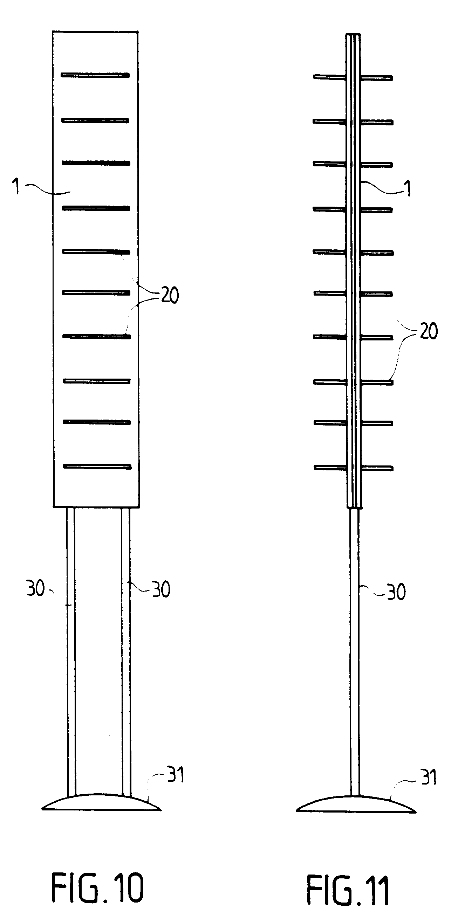

Le dispositif illustré aux figures 10 et 11 comprend un montant 1 et des tablettes 20 identiques à ceux du dispositif des figures 1 à 4, les entretoises du montant étant enfilées sur deux tiges tubulaires parallèles 30 qui s'élèvent verticalement à partir d'un pied 31 posé sur le sol. La fixation du montant sur les tiges peut se faire au moyen de pièces d'accrochage analogues aux pièces 8 décrites ci-dessus, adaptées au diamètre des tiges 30, ou bien ces dernières peuvent avoir un diamètre tel qu'elles soient guidées pratiquement sans jeu dans les évidements des entretoises.

## Revendications

1. Dispositif pour exposer des objets ou des informations, comprenant au moins un montant (1) comportant deux plaques (2,2a) s'étendant chacune sensiblement sur toute sa hauteur et sur toute sa largeur, juxtaposées et écartées l'une de l'autre dans la direction de son épaisseur et reliées entre elles, dans les régions marginales latérales du montant, par des entretoises (3,3a) présentant des évidements (5) qui les traversent en hauteur pour le passage de deux éléments allongés (9) sous forme de câbles tendus ou de tiges rigides s'étendant verticalement, les entretoises présentant des moyens d'accrochage (6) pour la liaison du montant auxdits éléments allongés et les plaques présentant des moyens de réception pour au moins un support (20) d'objets ou d'informations à exposer.

2. Dispositif selon la revendication 1, caractérisé en ce que les évidements sont ouverts vers les bords latéraux du montant sur toute la hauteur des entretoises pour permettre une introduction latérale des éléments allongés.

3. Dispositif selon l'une des revendications 1 et 2, caractérisé en ce que le montant est constitué à partir d'un profilé annulaire définissant deux entretoises s'étendant chacune sur toute sa hauteur, les moyens de réception étant formés par usinage du profilé.

4. Dispositif selon la revendication 3, caractérisé en ce que le profil des plaques est incurvé vers l'extérieur du montant.

5. Dispositif selon l'une des revendications 3 et 4, caractérisé en ce que le montant est formé à partir de deux pièces profilées identiques constituant chacune une plaque et une portion, adjacente à celle-ci, de chaque entretoise et assemblées entre elles par des surfaces coopérante (7) des portions d'entretoises.

6. Dispositif selon l'une des revendications précédentes, caractérisé en ce que les moyens de réception comprennent des fentes horizontales traversantes ménagées dans la région médiane de la largeur des plaques, chaque fente d'une plaque étant disposée dans le même plan horizontal qu'une fente de l'autre plaque de façon à permettre au montant d'être traversé par une tablette support horizontale.

7. Dispositif selon l'une des revendications précédentes, caractérisé en ce que les moyens de réception comprennent au moins deux lumières (24) ménagées l'une au-dessus de l'autre à mi-largeur de l'une au moins des plaques pour recevoir des appendices de liaison (27) prévus sur un bord latéral (26) d'un panneau support vertical.

8. Dispositif selon l'une des revendications précédentes, caractérisé en ce que le montant est immobilisé sur deux éléments allongés verticaux (9) traversant les évidements des entretoises au moyen de deux pièces d'accrochage (8) fixées sur chaque élément allongé et coopérant avec les moyens d'accrochage de l'entretoise correspondante respectivement aux extrémités supérieure et inférieure du montant.

9. Dispositif selon la revendication 8, caractérisé en ce que les évidements sont limités par des portions de surfaces cylindriques (6) s'étendant sur plus d'une demi-circonférence et que les pièces d'accrochage (8) présentent une portion cylindrique (17) qui s'ajuste dans l'évidement, raccordée à une portion (15) de plus grand diamètre par un épaulement (16) qui vient en butée sur une face d'extrémité de l'entretoise.

10. Dispositif selon l'une des revendications 8 et 9, caractérisé en ce que les éléments allongés sont des tiges (30) s'élevant à partir d'un pied (31) par lequel le dispositif peut reposer sur le sol.

11. Dispositif selon l'une des revendications 8 à 10, caractérisé en ce qu'il comprend au moins une tablette horizontale (20) traversant des fentes de liaison des deux plaques.

12. Dispositif selon l'une des revendications 8 à 11, caractérisé en ce qu'il comprend deux ensembles comportant chacun deux éléments allongés (23) et un montant (22), décalés l'un par rapport à l'autre selon une translation dans la direction de l'épaisseur des montants, et au moins un support (25) d'objets ou d'informations s'étendant d'un montant à l'autre dans cette direction.

13. Dispositif selon la revendication 12, caractérisé en ce que lesdits supports comprennent au moins un panneau vertical (25) lié par des appendices (27) de ses deux bords latéraux (26) respectivement aux plaques en regard des deux montants.

14. Dispositif selon l'une des revendications 12 et 13, caractérisé en ce que lesdits supports comprennent au moins une tablette horizontale (21) traversant des fentes de liaison des quatre plaques.

15. Dispositif selon l'une des revendications 11 et 14, caractérisé en ce que la tablette comporte un ressort allongé dans la direction de l'épaisseur du montant et propre à faire saillie élastiquement vers le bas de façon à s'appliquer contre le bord inférieur des fentes et à appliquer la face supérieure de la tablette contre le bord supérieur des fentes pour l'immobiliser en une position réglable dans ladite direction, et pouvant être rétracté vers le haut pour permettre à la tablette de coulisser librement dans ladite direction.

## Claims

1. Device for displaying objects or information, comprising at least one upright (1) including two plates (2, 2a), each one extending substantially along its entire height and over its entire width, these plates being juxtaposed and separated from one another in the direction of its thickness and being joined together, in the lateral marginal regions of the upright, by ties (3, 3a) exhibiting recesses (5) which pass through them in the height direction for the passage of two elongate elements (9) in the form of tensioned cables or of rigid rods extending vertically, the ties having fastening means (6) for connecting the upright to the said elongate elements, and the plates exhibiting means for accommodating at least one support (20) for objects or information to be displayed.

2. Device according to Claim 1, characterized in that the recesses are open towards the lateral edges of the upright over the entire height of the ties in order to allow the elongate elements to be inserted laterally.

3. Device according to one of Claims 1 and 2, characterized in that the upright is made from an annular section defining two ties each one extending over its entire height, the accommodating means being formed by machining the section.

4. Device according to Claim 3, characterized in that the profile of the plates is curved towards the outside of the upright.

5. Device according to one of Claims 3 and 4, characterized in that the upright is formed from two identical profiled components each constituting a plate and a portion adjacent thereto of each tie and joined together by interacting surfaces (7) of the tie portions.

6. Device according to one of the preceding claims, characterized in that the accommodating means comprise horizontal through-slots made in the middle region of the width of the plates, each slot of a plate being located in the same horizontal plane as a slot in the other plate so as to allow the upright to have a horizontal support shelf passed through it.

7. Device according to one of the preceding claims, characterized in that the accommodating means comprise at least two openings (24) formed one above the other midway along the width of at least one of the plates in order to accommodate connecting appendages (27) provided on a lateral edge (26) of a vertical support panel.

8. Device according to one of the preceding claims, characterized in that the upright is immobilized on two vertical elongate elements (9) passing through the recesses in the ties by means of two fastening components (8) fixed onto each elongate element and interacting with the fastening means of the corresponding tie respectively at the upper and lower end of the upright.

9. Device according to Claim 8, characterized in that the recesses are bounded by portions of cylindrical surfaces (6) extending over more than half a circumference and that the fastening components (8) have a cylindrical portion (17) which fits into the recess, this portion being connected to a portion (15) of greater diameter by a shoulder (16) which comes into abutment against an end face of the tie.

10. Device according to one of Claims 8 and 9, characterized in that the elongate elements are rods (30) rising up from a base (31) by means of which the device can rest on the ground.

11. Device according to one of Claims 8 to 10, characterized in that it comprises at least one horizontal shelf (20) passing through linking slots of the two plates.

12. Device according to one of Claims 8 to 11, characterized in that it comprises two assemblies, each one including two elongate elements (23) and an upright (22), offset with respect to one another by a translation in the direction of the thickness of the uprights, and at least one support (25) for objects or information extending from one upright to the other in this direction.

13. Device according to Claim 12, characterized in that the said supports comprise at least one vertical panel (25) linked by appendages (27) of its lateral edges (26) respectively to the plates facing it of the two uprights.

14. Device according to one of Claims 12 and 13, characterized in that the said supports comprise at least one horizontal shelf (21) passing through linking slots of the four plates.

15. Device according to one of Claims 11 and 14, characterized in that the shelf includes a spring which is elongate in the direction of the thickness of the upright and capable of projecting elastically downwards so as to press against the lower edge of the slots and press the upper face of the shelf against the upper edge of the slots in order to immobilize it in a position adjustable in the said direction, and able to be retracted upwards in order to allow the shelf to slide freely in the said direction.

## Patentansprüche

1. Schauanordnung bzw. -vorrichtung für Gegenstände oder Informationen, umfassend wenigstens einen Pfosten bzw. Rahmen (1), zwei Platten (2,2a) aufweisend, von denen sich jede im wesentlichen über seine gesamte Höhe und seine gesamte Breite erstreckt, nebeneinander angeordnet und beabstandet voneinander in Richtung seiner Dicke und miteinander verbunden, in den Randbereichen des Rahmens, durch Versteifungen (3,3a), die Aussparungen 5 aufweisen, die sie in der Höhe durchdringen für den Durchgang von zwei sich vertikal erstreckenden langgestreckten Elementen (9) in Form von gespannten Kabeln oder steifen Stangen, wobei die Versteifungen Befestigungseinrichtungen (6) aufweisen für die Verbindung des Rahmens mit besagten langgestreckten Elementen, und die Platten Aufnahmeeinrichtungen aufweisen für wenigstens einen Träger (20) von zur Schau zu stellenden Gegenständen oder Informationen.

2. Vorrichtung nach Anspruch 1, dadurch gekennzeichnet, daß die Aussparungen zu den Seitenrändern des Rahmens hin über die gesamte Höhe der Versteifungen offen sind, um eine seitliche Einführung der langgestreckten Elemente zu ermöglichen.

3. Vorrichtung nach einem der Ansprüche 1 und 2, dadurch gekennzeichnet, daß der Rahmen gebildet wird durch ein ringförmiges Profil, zwei Versteifungen definierend, von denen sich jede über seine gesamte Höhe erstreckt, wobei die Aufnahmeeinrichtungen gebildet werden durch Bearbeitung des Profils.

4. Vorrichtung nach Anspruch 3, dadurch gekennzeichnet, daß die Form der Platten in Richtung Außenseite des Rahmens gekrümmt ist.

5. Vorrichtung nach einem der Ansprüche 3 und 4, dadurch gekennzeichnet, daß der Rahmen gebildet wird durch zwei identische Profilstücke, jedes eine Platte aufweisend und einen an diese angrenzenden Teil von jeder Versteifung, zusammengebaut mittels zusammenwirkender Flächen (7) der Versteifungsteile.

6. Vorrichtung nach einem der vorangehenden Ansprüche, dadurch gekennzeichnet, daß die Aufnahmeeinrichtungen durchdringende horizontale Schlitze aufweisen, vorgesehen im Mittelbereich der Breite der Platten, wobei jeder Schlitz einer Platte in derselben horizontalen Ebene angeordnet ist wie ein Schlitz der anderen Platte, so daß der Rahmen von einem horizontalen Trägerfachbrett durchquert werden kann.

7. Vorrichtung nach einem der vorangehenden Ansprüche, dadurch gekennzeichnet, daß die Aufnahmeeinrichtungen wenigstens zwei Langlöcher (24) umfassen, übereinander angebracht auf halber Breite von wenigstens einer der Platten, um Verbindungsansätze (27) aufzunehmen, vorgesehen an einem seitlichen Rand (26) einer vertikalen Trägertafel.

8. Vorrichtung nach einem der vorangehenden Ansprüche, dadurch gekennzeichnet, daß der Rahmen auf zwei die Aussparungen der Versteifungen durchquerenden vertikalen langgestreckten Elementen (9) blockiert wird durch zwei Befestigungsstücke (8), festgemacht an jedem langgestreckten Element und zusammenwirkend mit den Befestigungseinrichtungen der entsprechenden Versteifung, jeweils am oberen und unteren Ende des Rahmens.

9. Vorrichtung nach Anspruch 8, dadurch gekennzeichnet, daß die Aussparungen begrenzt werden durch zylindrische Flächenteile (6), die sich über mehr als einen Halb-Umfang erstrecken, und daß die Befestigungsstücke (8) einen zylindrischen Teil (17) aufweisen, der in die Aussparung paßt und durch eine Schulter (16) verbunden ist mit einem Teil (15) von größerem Durchmesser, der auf einer Endfläche der Versteifung zum Anschlag kommt.

10. Vorrichtung nach einem der Ansprüche 8 und 9, dadurch gekennzeichnet, daß die langgestreckten Elemente Stangen (30) sind, die sich aus einem Fuß (31) erheben, durch den die Vorrichtung auf dem Boden stehen kann.

11. Vorrichtung nach einem der Ansprüche 8 bis 10, dadurch gekennzeichnet, daß sie wenigstens ein horizontales Fachbrett (20) aufweist, das Verbindungsschlitze der beiden Platten durchquert.

12. Vorrichtung nach einem der Ansprüche 8 bis 11, dadurch gekennzeichnet, daß sie zwei Einheiten umfaßt, von denen jede zwei langgestreckte Elemente (23) und einen Rahmen (22) aufweist, einer Verschiebung in Richtung Dicke der Rahmen entsprechend voneinander beabstandet, und wenigstens einen Träger (25) von Gegenständen oder Informationen, der sich in dieser Richtung von einem Rahmen zum anderen erstreckt.

13. Vorrichtung nach Anspruch 12, dadurch gekennzeichnet, daß besagte Träger wenigstens eine vertikale Tafel (25) umfassen, jeweils durch Ansätze (27) ihrer Seitenränder (26) mit den sich gegenüberstehenden Platten der beiden Rahmen verbunden.

14. Vorrichtung nach einem der Ansprüche 12 und 13, dadurch gekennzeichnet, daß besagte Träger wenigstens ein horizontales Fachbrett (21) umfassen, das die Verbindungsschlitze der vier Platten durchquert.

15. Vorrichtung nach einem der Ansprüche 11 und 14, dadurch gekennzeichnet, daß das Fachbrett eine in Richtung Plattendicke langgestreckte Feder umfaßt, die elastisch nach unten vorsteht, so daß sie auf dem unteren Rand der Schlitze aufliegt und die Oberseite des Fachbretts gegen den oberen Rand der Schlitze drückt, um es in einer in dieser Richtung verstellbaren Position zu blockieren, wobei diese Feder nach oben zurückgezogen werden kann, um ein freies Gleiten des Fachbretts in besagter Richtung zu ermöglichen.
